# EUROPEAN PATENT SPECIFICATION

(11) **EP 1 128 162 B1**
(45) Date of publication and mention of the grant of the patent: **14.11.2012**
(21) Application number: 00126581.8
(22) Date of filing: 12.12.2000
(51) Int. Cl.: G01C 21/26

(54) **Navigation device**
Navigationsvorrichtung
Dispositif de navigation

(30) Priority: 22.02.2000 JP 2000044382
(43) Date of publication of application: 29.08.2001
(73) Proprietor: AISIN AW CO., LTD., Anjo-shi, Aichi 444-1192 (JP)
(72) Inventor: Ito, Yasunobu, Anjo, Aichi 444-1192 (JP); Yamada, Kunihiro, Anjo, Aichi 444-1192 (JP); Kato, Daisuke, Anjo, Aichi 444-1192 (JP)
(74) Representative: Vossius & Partner

(56) References cited:
- EP-A- 0 838 771
- DE-A- 19 811 235
- DE-A- 19 839 309
- US-A- 5 195 040

## Description

The present invention relates to a navigation device.

Conventionally, in a vehicle equipped with a navigation device, based on a current position of the vehicle detected by a current position detection processing part, a destination set by a vehicle's driver, and the like, a route from the current position to the destination is searched, which allows the vehicle to be run in accordance with the searched route. In addition, in an automatic transmission, a vehicle control system has been provided which is constructed so as to control the running of a vehicle based on navigation information and current position transmitted from the navigation device.

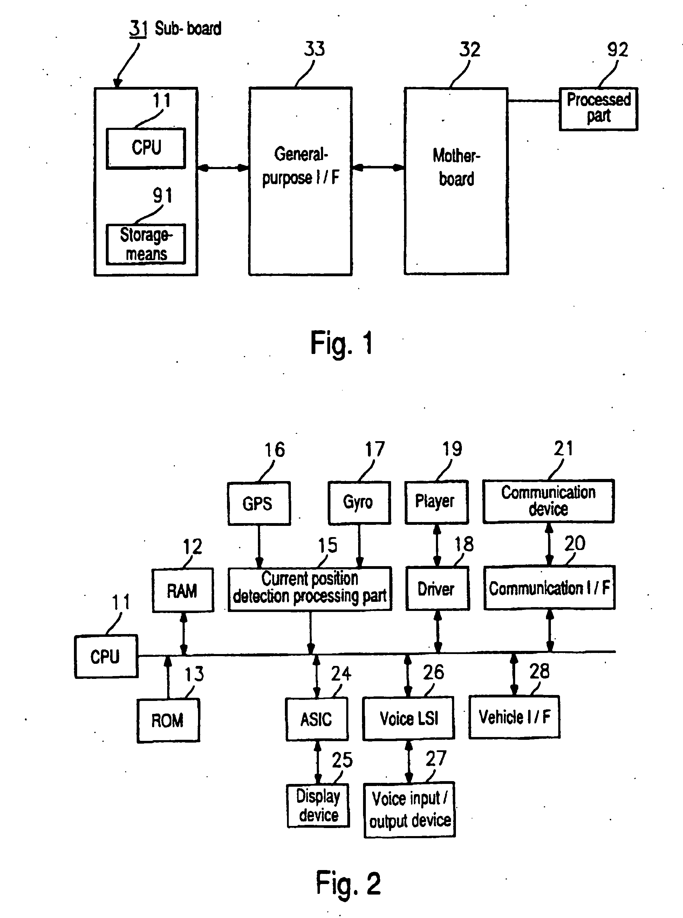

Fig. 2 is a block diagram of the conventional navigation device.

Referring to the figure, the navigation device is provided with a CPU 11 for controlling the entire navigation device, a work memory (RAM) 12 to be used when the CPU 11 executes the processing of various operations, a ROM 13 in which various programs for searching a route to a destination and guidance along the route as well as a control program are stored, and a current position detection processing part 15. A GPS 16 and a gyro 17 are connected to the current position detection processing part 15. The GPS 16 receives radio waves transmitted from a satellite to detect the current position on the earth. The gyro 17 detects the yaw rate of the vehicle and integrates the detected yaw rate to detect the direction of the vehicle.

Further, the navigation device is provided with a driver 18 and a player 19 serving as a data recording part in which road condition data is recorded. By driving the driver 18, the road condition data can be read out from the player 19 and predetermined data can be written onto the player 19.

The navigation device also has a communication interface (I/F) 20 serving as a communication part, a communication device 21 connected to the communication interface 20, a semicustom IC 24, such as an ASIC for example, for a specified purpose having a drawing function, and a display device 25 connected to the ASIC 24. The navigation device is further provided with a voice LSI 26 to which a voice input/output device 27 is connected.

On a display screen of the display device 25, an operation guidance, an operation menu, an operation key guidance, and a guidance along the running route are displayed as well as the current position, a map around the current position, and a route to a destination. As the display device 25, a CRT display, a liquid crystal display, a plasma display, and a hologram device which projects a hologram on the front glass can be used.

The voice input/output device 27 includes a microphone, a voice synthesizer, a speaker, not shown, and inputs necessary information by means of voice and outputs guide information from the speaker by means of voice synthesized by the voice synthesizer.

The navigation device also has a vehicle interface (I/F) 28 provided in conformance with a vehicle equipped with the navigation device. Via the vehicle interface 28, an engine control device for controlling the engine, an automatic transmission control device for controlling the automatic transmission, and various sensors (an engine speed sensor, a throttle opening sensor, and a vehicle speed sensor, and the like) are connected.

A power source (not shown) is provided, and the power source generates a predetermined power voltage and applies the voltage to various components such as the CPU 11, the work memory 12, the ROM 13, the current position detection processing part 15, the GPS 16, the gyro 17, the driver 18, the player 19, the communication interface 20, the communication device 21, the ASIC 24, the display device 25, the voice LSI 26, the voice input/output device 27, and the vehicle interface 28. Furthermore, an input device (not shown) for correcting the current position when the vehicle starts running and inputting a destination can be connected to the CPU 11. On the other hand, in a navigation device in which audio equipment, a video, a radio, and other products are integrally mounted, the products are connected to the CPU 11.

In the navigation device thus constructed, the CPU 11 executes the guide and display processing, whereby a current position and a map around the current position are displayed on the display screen of the display device 25. When a driver of the vehicle operates the input device to set a destination, the CPU 11 executes route search processing to search a route from the current position to the destination, and when the route is searched, executes guide and display processing to display the current position and the map around the current position on the display screen for guidance of the route. Therefore, the vehicle's driver can drive the vehicle following the route.

However, in the conventional navigation device, if the specifications of processed parts such as the GPS 16, the gyro 17, the player 19, the communication device 21, the display device 25, the voice input/output device 27, the engine control device, the automatic transmission control device, and the sensors are different, internal communication (LAN) method between the GPS 16, the gyro 17 and the current position detection processing part 15, between the player 19 and the driver 18, between the display device 25 and the ASIC 24, between the voice input/output device 27 and the voice LSI 26, and between the engine control device, the automatic transmission control device, and the sensors and the vehicle interface 28 may be different, or external communication method between the communication interface 20, the communication device 21 and an external communication device (not shown) may be different. As a result, the specifications of the detection signals, control signals, various data, and power voltage become different. Further, if the specifications of other products such as an audio equipment, a video, and a radio to be mounted on the navigation device are different, the specifications of the control signal to be transmitted between other product function parts (not shown) and other products may be different, or the specifications of the power voltage may be different.

Therefore, it is necessary that the navigation device be designed and manufactured for each model, which is provided with processed parts having different specifications, or for eachmodel, which is equipped with other products with different specifications. Consequently, not only the mountability of the navigation device deteriorates, but also the cost increases.

DE 198 39 309 A and US-A-5 195 040 disclose a navigation device according to the preamble of claim 1. Similar devices are disclosed in EP-A-0 838 771 and DE 198 11 235 A.

. The object of the invention is to provide a navigation device with improved mountability and reduced cost by solving the abovementioned problems in the related-art navigation device. This object is achieved with the features of the claims.

With a navigation device according to the invention, even it the specifications of the processed parts - connected to the sub-processing unit are different, the components of the sub-processing unit are designed and manufactured in conformance with the processed parts, whereby the main processing unit can be designed and manufactured as a general-purpose product. Therefore, not only the mountability of the navigation device can be improved, but also the cost thereof can be reduced.

Furthermore, the processed part identification processing means identifies the processed part connected to the sub-processing unit and determines the specifications of the processed part. Therefore, based on the result of determination, control signals for the sub-processing unit and various data are generated and transmitted to the sub-processing unit. Moreover, the processed part identification processing means identifies the processed part based on the processed part identification information and determines the specifications of the processed part.

In case of the embodiment of claim 3, by judging the type of the sub-processing unit, the processed part identification processing means identifies the processed part connected to the sub-processing unit and determines the specifications of the processed part. Accordingly, based on the result of determination, control signals for the sub-processing unit and various data are generated and transmitted to the sub-processing unit.

In case of the embodiment of claim 5, since the main processing unit is made of a multi-layered circuit board with three or more layers, the generation of noise in the bus can be suppressed. In addition, since the sub-processing unit is formed of two layers or less of circuit boards, the cost of the navigation device can be reduced.

The foregoing and other features and advantages of the present invention will become more readily appreciated as the same becomes better understood by reference to the following detailed description when taken into conjunction with the accompanying drawings wherein:
Fig. 1 is a function block diagram of the navigation device of a first embodiment of the invention.
Fig. 2 is a block diagram of the related-art navigation device.
Fig. 3 is a control block diagram of the navigation device of the first embodiment of the invention.
Fig. 4 is a flow chart showing the operation of the sub-board of the first embodiment of the invention.
Fig. 5 is a perspective view showing the line-up development of the sub-board of the first embodiment of the invention.
Fig. 6 is a perspective view showing the example of loading
   the sub-board to the navigation device of the first embodiment of the invention.
Fig. 7 is a control block diagram of the navigation device of an example which may help to further explain the invention.
Fig. 8 is a perspective view showing the assembled condition of the sub-board and a motherboard of a third embodiment of the invention.

Fig. 1 is a function block diagram of the navigation device of a first embodiment of the invention.

In the figure, reference numeral 31 denotes a sub-board serving as a main processing unit provided with a CPU 11 and storage means 91, reference 32 denotes a motherboard serving as a sub-processing unit connected to the sub-board, reference numeral 33 denotes a general-purpose interface serving as connection means for connecting the sub-board 31 and the motherboard 32, and reference numeral 92 denotes a processed part connected to the motherboard 32.

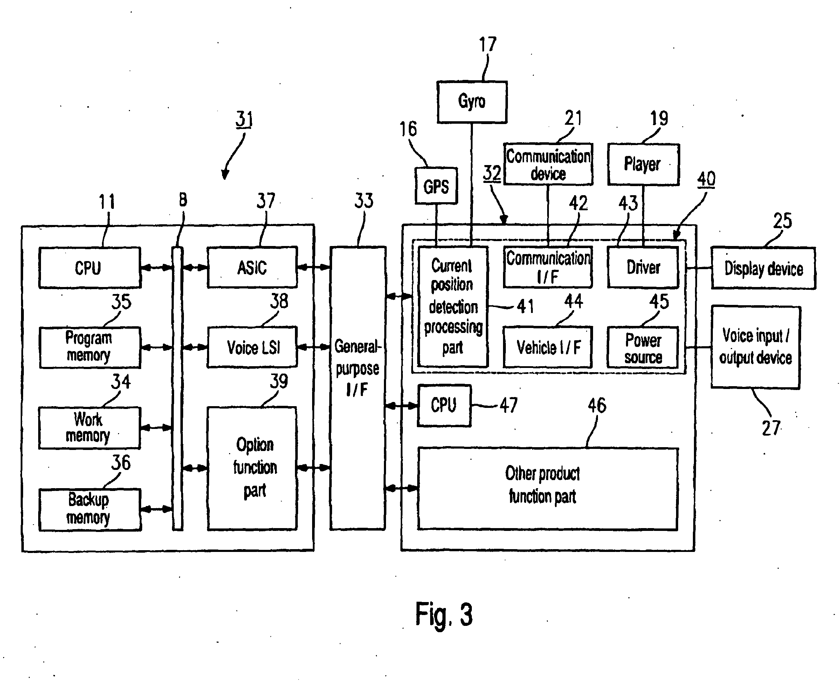

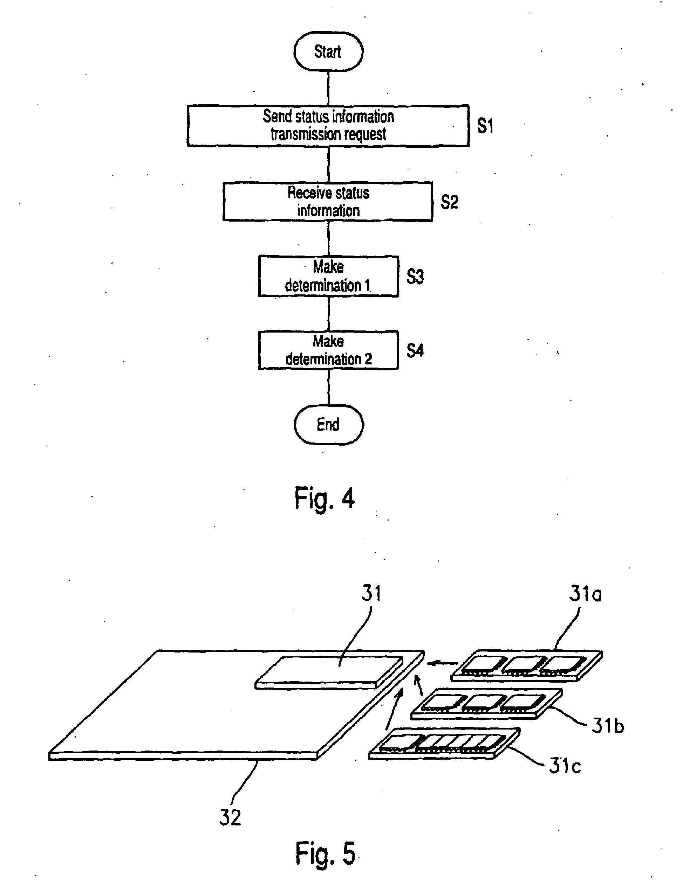

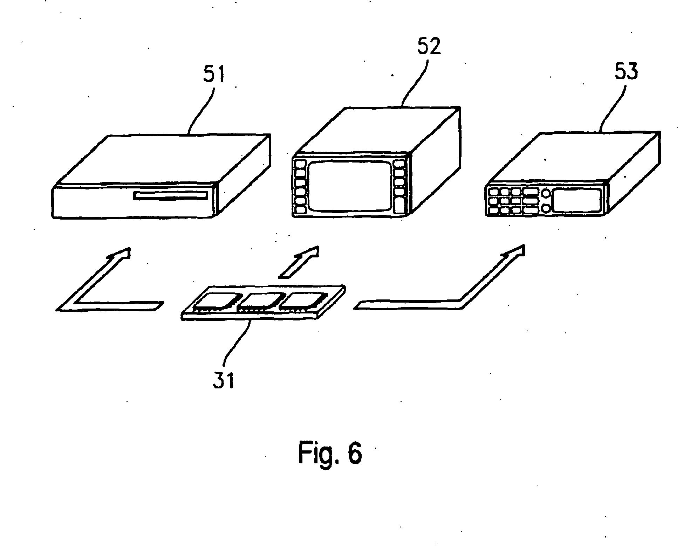

Fig. 3 is a control block diagram of the navigation device of the first embodiment of the invention. Fig. 4 is a flow chart showing the operation of the sub-board of the first embodiment of the invention. Fig. 5 is a perspective view showing a line-up development of the sub-board of the first embodiment of the invention, and Fig. 6 is a perspective view showing an example of loading of the sub-board to the navigation device of the first embodiment of the invention.

In the figures, reference numeral 31 denotes a sub-board serving as the main processing unit, reference numeral 32 denotes a motherboard serving as the sub-processing unit formed independently from the sub-board 31, and reference numeral 33 denotes a general-purpose interface serving as the connection means for connecting the sub-board 31 and the motherboard 32. In the present embodiment, the sub-bard 31 and motherboard 32 are formed of circuit boards, and the sub-board 31 is mounted on the motherboard 32, and a board-to-board connector is used as the general-purpose interface 33. The sub-board 31 can be made of a custom chip or a card. If the sub-board 31 is made of a card, the sub-board 31 can be freely inserted into and ejected from a card slot formed in the navigation device.

In the present embodiment, although a board-to-board connector is used as the general-purpose interface 33, however, in place of the board-to-board connector, a flexible cable, a solder pin, or the like can be used. In the present embodiment, although the sub-board 31 is mounted on the motherboard 32, the sub-board 31 and the motherboard 32 may be connected in a condition where they are separated from each other, or the sub-board 31 and the motherboard 32 may be mounted on another board.

The sub-board 31 is provided with the CPU 11 for controlling the entire navigation device, a work memory 34 to be used when the CPU 11 executes processing of various operations, a program memory 35 for recording various programs for searching a route to a destination and guidance of the route in addition to a program for control, a backup memory 36 for backup, a semicustom IC for a specified purpose serving s a drawing processing part with a drawing function, an ASIC 37, for instance, a voice LSI 38, and an option function part 39 for controlling option devices such as an FM multiplex decoder and VICS. Components such as the CPU 11, the work memory 34, the program memory 35, the backup memory 36, the ASIC 37, the voice LSI 38, and the option function part 39 within the sub-board 31 are connected to each other via a bus B. The ASIC 37, the voice LSI 38, and the option function part 39 are connected to the general-purpose interface 33. The work memory 34, the program memory 35, and the backup memory 36 constitute the storage means 91 (Fig. 1) and a recording medium.

The motherboard 32 includes a navigation control part 40, a CPU 47, and an other product function part 46. The navigation control part 40 is provided with a current position detection processing part 41, a communication interface 42 serving as a communication part, a driver 43, a vehicle interface 44, and a power source 45, wherein the navigation control part 40, the other product function part 46, and the CPU 47 are connected to the general-purpose interface 33.

A GPS 16 and a gyro 17 are connected to the current position detection processing part 41. The GPS 16 receives radio waves generated from a satellite to detect a current position on the earth, and the gyro 17 detects the yaw rate of the vehicle and integrates the detected yaw rate to detect the direction of the vehicle. As the gyro 17, a gas rate gyro, a vibrating structure gyro, and the like may be used. The current position detection means includes the GPS 16 and the gyro 17. Furthermore, the player 19 serving as a data recording part is connected to the driver 43, and by driving the driver 43, the road condition data can be read out from a recording medium, for example, a DVD set on the player 19, or a predetermined data can be written onto the recording medium.

Communication device 21 is connected to the communication interface 42. Accordingly, communication can be made between the communication device 21 and external communication devices (not shown) such as an FM transmitter and a telephone circuit to transmit and receive various data. Various data received includes, for example, road information containing traffic congestion conditions, information on traffic accidents, and D-GPS information for detecting the detection errors of the GPS 16 which has been received by the information sensors (not shown).

The vehicle interface 44 is provided in accordance with the vehicle equipped with the navigation device, to which an engine control device for controlling the vehicle interface 44 and an engine (not shown), an automatic transmission control device for controlling an automatic transmission (not shown), and various sensors (an engine speed sensor, throttle opening sensor, vehicle speed sensor, and the like) are connected.

The power source 45 generates a predetermined power voltage and applies the voltage to the components of the sub-board 31 including the CPU 11, the work memory 34, the program memory 35, the backup memory 36, the ASIC 37, the voice LSI 38, and the option function part 39, and also, applies the voltage to the components of the motherboard 32 including the current position detection processing part 41, the communication interface 42, the driver 43, the vehicle interface 44, the other product function part 46, and the CPU 47, and further applies the voltage to the components including the GPS 16, the gyro 17, the player 19, the communication device 21, the display device 25, and the voice input/output device 27.

Furthermore, an input device (not shown) for correction of the current position when the vehicle starts running and input of a destination may be connected to the navigation control part 40. For the input device, a keyboard provided separately from the display device 25, a mouse, a barcode reader, a light pen, and remote controller for remote operation can be used. Moreover, the input device can be comprised of a touch panel by which inputs can be made by touching keys or a menu displayed as images on the display device 25.

In a navigation device integrally loaded with other products such as an audio equipment, a video, and a radio, these products are connected to the other product function part 46.

Furthermore, the display device 25 and the voice input/output device 27 are connected to the navigation control part 40 via a display processing part and a voice input/output processing part (not shown), respectively. On the display screen of the display device 25, an operation guidance, an operation menu, a guidance of operation keys, and a guidance along a route to be taken are displayed as well as the current position, a map around the current position, and a route to the destination. As the display device 25, a CRT display, a liquid crystal display, a plasma display, or a hologram device which projects a hologram on the front glass may be used. The voice input/output device 27 is comprised of a microphone, a voice synthesizer, a speaker, not shown, which inputs necessary information by means of voice and outputs guide information from the speaker by means of voice synthesized by the voice synthesizer. In addition to the voice synthesized by the voice synthesizer, various guide information is recorded on a tape and the guide information can be outputted from the speaker.

In the navigation device thus constructed, the CPU 11 executes guide and display processing to display the current position and the map around the current position on the display screen of the display device 25. When a driver of the vehicle sets a destination by operating the input device, the CPU 11 executes route searching processing to search a route from the current position to the destination, and when a route is searched, executes guide and display processing to display the current position and a map around the current position on the display screen for guidance along the route. At this time, drawing processing is executed by the ASIC 37. Accordingly, the driver can drive the vehicle along the route.

Furthermore, navigation information including the current position or the like is transmitted to the automatic transmission control device via the vehicle interface 44 from the navigation device so as to control the vehicle. In this case, for example, when the vehicle approaches a corner, corner control as a vehicle control is implemented, whereby the vehicle is able to pass the corner with the low-speed side of the transmission, and when the vehicle approaches an intersection, intersection control as a vehicle control is implemented, whereby the vehicle is able to pass the intersection with the low-speed side of the transmission.

In the present embodiment, the current position detection processing part 41 is connected to the GPS 16 and the gyro 17, however, in place of the GPS 16 and the gyro 17, the part may be connected to other current position detection means such as a terrestrial magnetism sensor, a distance sensor, a steering sensor, a beacon sensor, or an altimeter.

The terrestrial magnetism sensor detects the direction of the vehicle by measuring the terrestrial magnetism, and the distance sensor detects a distance between predetermined points on a road. As the distance sensor, for example, a sensor which measures the number of revolutions of a wheel (not shown) and detects a distance based on the number of revolutions, or a sensor which measures acceleration and integrates the acceleration two times to detect a distance may be used. In addition, the steering sensor is for detecting the steering angle, and for example, an optical rotation sensor mounted at a rotary part of a handle (not shown), a rotational resistance sensor, or an angle sensor mounted on the wheel are used. The beacon sensor receives positional information from beacons disposed along the road to detect the current position.

Furthermore, the GPS 16 and the beacon sensor can independently detect the current position, however, in the case of the distance sensor, the current position is detected by combining the distance detected by the distance sensor and the direction detected by the terrestrial magnetism sensor. Alternatively, the current position can be detected by combining the distance detected by the distance sensor and the steering angle detected by the steering sensor.

The player 19 has a map data file, an intersection data file, a node data file, a road data file, a photo data file, and a data file storing information for each main area concerning hotels, gas stations, and guidance of tourist resorts. In the data files, in addition to the data for searching a route, various data is stored in order to display a guide map along the searched route, characteristic photos and frame views of intersections and the route, the distance to a next intersection, the direction of travel of the vehicle from the next intersection, and other guide information on the display screen of the display device 25. In the player 19, various data for outputting predetermined information from the voice input/output device 27 is also stored.

Intersection data concerning the respective intersections is stored in an intersection data file, node data concerning the nodes is stored in a node data file, and road data concerning the roads is stored in a road data file. Road condition data includes the intersection data, the node data, and the road data. The node data is an element for indicating the position and shape of a road in the map data stored in the map data file, which is composed of various data including coordinates indicating an absolute position of each node on a road, a length of a link connecting the nodes, and a link angle showing the absolute direction at each node. With the road data, the width, slope, cant, bank, condition of the surface, number of lanes, point at which the number of lanes decreases, and point at which the width decreases are indicated with regard to the road itself. The radius of curvature, intersections, T-junctions, and entrances to corners are indicated with regard to the corners. Railroad crossings, highway exit ramp ways, tollgates of highways, downhill lanes, uphill lanes, road classification (national roads, general roads, highways, and the like) are indicated with regard to road attributes.

In the present embodiment, a DVD is used in the player 19, and semiconductor memories are used as the work memory 34, the program memory 35, and the backup memory 36, however, in place of the DVD and semiconductor memories, a magnetic core, a magnetic tape, a magnetic disk, a floppy disk, a magnetic drum, a CD, an MD, an optical disk, an IC card, an optical card, and the like may be used.

In the present embodiment, various programs are recorded in the program memory 35, and various data is recorded in the player 19, however, the various programs and data may be stored in a same external recording medium. In this case, for example, a flash memory may be provided on the sub-board 31, whereby the programs and data are read-out from the external recording medium and written onto the flash memory. Consequently, by replacing the external recording medium, the programs and data can be updated. Thus, by starting various programs recorded in the recording medium, various processing can be executed based on a predetermined data. In addition, at least a part of the programs and data can be received by the communication device 21 and recorded in the flash memory.

If the specifications of the processed part 92 including the GPS 16, the gyro 17, the player 19, the communication device 21, the display device 25, the voice input/output device 27, the engine control device, the automatic transmission control device, and the sensors are different, the internal communication (LAN) method between the GPS16, the gyro 17 and the current position detection processing part 41, between the player 19 and the driver 43, between the display device 25, the voice input/output device 27 and the navigation control part 40, and between the engine control device, the automatic transmission control device, the sensors and the vehicle interface 44 may be different, or the external communication method between the communication interface 42, communication device 21 and the external communication device may be different. As a result, the specifications of the detection signals, control signals, various data, and power voltage become different. When the specifications of other products such as the audio equipment, the video, and the radio which are mounted in the navigation device are different, the specifications of the control signals to be transmitted between the other product function part 46 and other products may be different, or the specifications of the power voltage may be different.

In this case, the navigation device must be designed and manufactured for each model provided with the processed part 92 having different specifications, or for each model provided with other products with different specifications. This not only deteriorates the mountability of the navigation device, but also increases the cost.

Therefore, in the present embodiment, the sub-board 31 and the motherboard 32 are independently designed and manufactured. Accordingly, even if the specifications of the processed part 92 connected to the motherboard 32 are different, the components of the motherboard 32 are designed and manufactured in accordance with the processed part 92, whereby the sub-board 31 can be designed and manufactured as a general-purpose product. This not only improves the mountability of the navigation device, but also reduces the cost.

In a casewhere the sub-board 31 and motherboard 32 are connected, since the motherboard 32 has been designed and manufactured in accordance with the processed part 92, the control signals and various data to be transmitted to the motherboard 32 from the sub-board 31 must be generated in accordance with the type of the motherboard 32 or the specifications of the processed part 92.

Therefore, when processed part identification information generationmeans (not shown) is provided in the CPU 47, and processed part identification processing means(not shown) is provided in the CPU 11, and the processed part identification processing means sends a processed part information transmission request to the CPU 47, the processed part identification information generation means generates processed part identification information indicating the type of the motherboard 32 in accordance with the processed part information transmission request, and transmits the processed part identification information to the CPU 11 as status information.

The processed part identification means judges the type of the motherboard 32 based on the status information upon receiving the status information, identifies each processed part 92 based on the result of the determination and determines the specifications of the processed part 92. The processed part identification processing means successively determines, following determinations 1, 2,..., the internal communication method between the GPS 16, the gyro 17 and the current position detection processing part 41, between the player 19 and the driver 43, between the display device 25, the voice input/output device 27 and the navigation control part 40, and between the engine control device, the automatic transmission control device, the sensors and the vehicle interface 44, and the external communication method between the communication interface 42, the communication device 21 and the external communication device. Then, the processed part identification means generates control signals for the motherboard 32 and various data based on the results of the determinations, and transmits them to the motherboard 32.

As the sub-board 31, a standard board 31a which executes processing at a medium processing rate with a medium-level function, a high-performance board 31b which executes processing at a high processing rate, and a high-function board 31c which executes processing with a high function are used as shown in Fig. 5. A predetermined sub-board 31 may be selected and used among the standard board 31a, the high-performance board 31b, and the high-function board 31c as necessary.

The sub-board 31 may be detachably attached to the navigation device. In this case, by replacing the sub-board 31 at the time of maintenance service to optionally change the performance and function, general usability of the sub-board 31 can be increased.

Furthermore, as shown in Fig. 6, even when the sub-board 31 is mounted in a navigation device 51 of a type in which the motherboard 32 and the display device 25 are housed in separate casings, mounted in a navigation device 52 of a type in which an audio equipment and a video are integrally housed in one casing, or mounted in a navigation device 53 of a type in which the motherboard 32 and a radio are integrally housed in one casing, such that the motherboard 32 is designed in conformance with each type of the navigation device, the sub-board 31 can be designed and manufactured as a general-purpose product.

Next, the flow chart will be described.
In step S1, a status information transmission request is sent.
In step S2, the status information is received.
In step S3, determination 1 is made.
In step S4, determination 2 is made and the processing is terminated.

Next, a second embodiment of the invention will be described.

Components that have the same structures as those of the first embodiment are referenced by the same reference numerals, and description thereof is omitted.

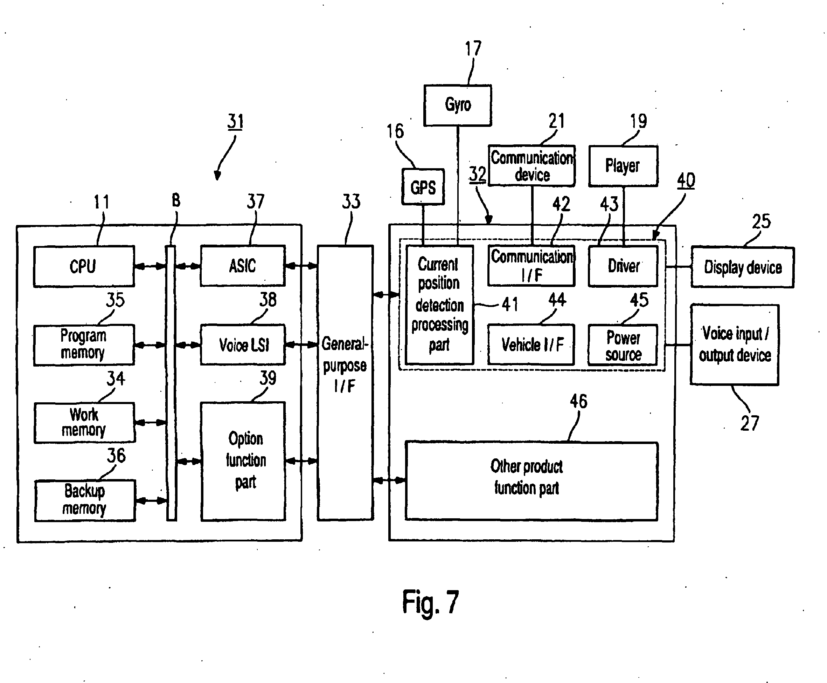

Fig. 7 is a control block diagram of the navigation device of the second embodiment of the invention.

In the present embodiment, a processed part identification information generation means, not shown, is provided with the processed part 92 (Fig. 1). When the processed part identification processing means of the CPU 11 sends a processed part information transmission request to the processed part 92, the processed part identification information generation means generates processed part identification information indicating the specifications of the processed part 92 in accordance with the processed part information transmission request. Then the processed part identification information generation means transmits the processed part identification information to the CPU 11 as status information.

Upon receiving the status information, the processed part identification processing means identifies the processed part 92 based on the status information, and determines the specifications of the processed part 92. For example, the processed part identification processing means determines the internal communication method between the GPS 16, the gyro 17, and the current position detection processing part 41, between the player 19 as a data recording part and the driver 43, between the display device 25, the voice input/output device 27, and the navigation control part 40, and between the engine control device, the automatic transmission control device, the sensors, not shown, and the vehicle interface 44, and the external communication method between the communication interface 42, the communication device 21, and the unillustrated external communication device, and based on the results of determinations, the means generates a control signal for the motherboard 32 serving as a sub-processing unit and various data, and sends them to the motherboard 32.

For example, in a case where the processed part identification information generation means is provided in the player 19 as a processed part 92, when the processed part identification processing means sends a processed part information transmission request to the player 19, the processed part identification information generation means of the player 19 reads-out processed part identification information identifying the specifications of the player 19 from a recording medium, for example, a DVD set in the player 19 in accordance with the processed part information transmission request, and transmits the information to the CPU 11 as status information.

Upon receiving the status information, the processed part identification means identifies the player 19 based on the status information and determines the specifications of the player 19. The processed part identification processing means determines the internal communication method between the player 19 and the driver 43, and based on the result of the determination, generates a control signal for the player 19 and various data, and sends them to the motherboard 32.

At the same time as reading-out the processed part identification information from a DVD, the player 19 may read-out a program from the DVD.

In the embodiments, the processed part identification information generation means is provided in the CPU 47 or the processed part 92, and processed part identification information generated by the processed part identification information generation means is transmitted to the CPU 11 as status information. However, the processed part identification processing means can identify the player 19 and determine the specifications of the player 19 based on the electric conditions of a plurality of communication ports (communication lines) disposed on the sub-board 31 as a main processing unit and the motherboard 32. In this case, the processed part identification information generation means is comprised of the communication ports.

Therefore, in accordance with the type of the motherboard 32 or the specifications of the processed part 92, levels (1 or 0) of identification signals are outputted to the communication ports on the motherboard 32 side. On the sub-board 31 side, an identification signal table is recorded in the backup memory 36 or the like, and the processed part identification processing means reads the levels of the identification signal inputted into the communication ports on the sub-board 31 side, and by referring to the identification signal table based on the combination of the levels, identifies the processed part 92 and determines the specifications of the processed part 92.

In place of the communication ports, voltage ports may be used. In this case, on the motherboard 32 side, predetermined voltage signals are generated in accordance with the type of the motherboard 32 or the specifications of the processed part 92, and outputted to the voltage ports on the motherboard 32 side. On the sub-board 31 side, a voltage signal table is recorded in the backup memory 36, and the processed part identification processing means reads the levels of the voltage signals inputted to the voltage ports on the sub-board 31 side, and identifies the processed part 92 upon referring the voltage signal table based on the levels and determines the specifications of the processed part 92.

In the abovementioned embodiments, the CPU 11 transmits, in synchronization with a clock signal, control signals or data to the work memory 34, the program memory 35, the backup memory 36, the ASIC 37, the voice LSI 38, and the option function part 39 via the bus B, so that if noise occurs in the bus B, the noise influences other products.

Therefore, a third embodiment of the invention in which the generation of noise is controlled will be described. Components that have the same structures as those of the first embodiment are referenced by the same reference numerals, and description thereof is omitted.

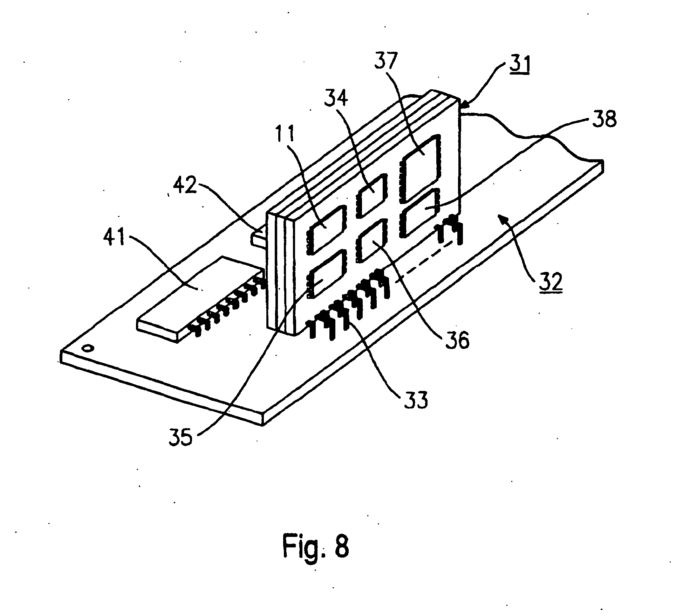

Fig. 8 is a perspective view showing the assembled condition of the sub-board and the motherboard of the third embodiment of the invention.

In this case, the sub-board 31 as a main processing unit is provided with the CPU 11, and the CPU 11 transmits, in synchronization with a clock signal, control signals or data to the work memory 34, the program memory 35, the backup memory 36, the ASIC 37 as a drawing processing part, the voice LSI 38 and the option function part 39 (Fig. 3) via the bus B. The ASIC 37 and voice LSI 38 have the function of an I/O port, and the output control signals or data are outputted to the motherboard 32 as a sub-processing unit and control signals or data are inputted from the motherboard 32 via the ASIC 37 and the voice LSI 38.

Since the ASIC 37 and the voice LSI 38 have the function of an I/O port, noise is most easily generated in the bus B which connects the CPU 11, the ASIC 37, and the voice LSI 38. Therefore, the sub-board 31 is formed of a multi-layer structure of three or more layers (four layers in the present embodiment) of circuit boards. Accordingly, generation of noise in the bus B is suppressed, whereby the influences of noise on other products can be prevented.

In buses and signal lines (not shown) within the motherboard 32, the generation of noise is less, so that the motherboard 32 is formed of two layers or less (two layers in the present embodiment) of circuit boards. Accordingly, the cost of the motherboard 32 can be reduced, and the cost of the navigation device can be reduced.

## Claims

1. A navigation device, comprising:
a main processing unit (31) provided with a CPU (11) for executing route search processing and guide and display processing and storage means (91);
a sub-processing unit (32) connected to the main processing unit (31);
connection means (33) for connecting the main processing unit and the sub-processing unit; and
one or more processed parts (92), such as a GPS (16), a gyro (17), a player (19), a communication device (21), a display device (25), a voice input/output device (27), an engine control device, an automatic transmission control device, and/or sensors, wherein all processed parts are connected to the sub-processing unit (32);
**characterized in that**
the main processing unit (31) is provided with a processed part identification processing means (11) for identifying the processed part (92) which is connected to the sub-processing unit; and
the sub-processing unit (32) is provided with processed part identification information generation means (47) for generating processed part identification information, and the processed part identification processing means (11) identifies the processed part based on the processed part identification information.

2. A navigation device as set forth in Claim 1, wherein the main processing unit is provided with a drawing processing part having a drawing function, and processed part is provided with current position detection means for detecting a current position and a data recording part for recording data.

3. A navigation device as set forth in Claim 1 or 2, wherein the processed part identification processing means identifies the processed part by judging the type of the sub-processing unit.

4. A device as set for the in Claim 1, 2 or 3, wherein the connection means (33) is a general-purpose interface.

5. A device as set forth in any one of Claims 1 to 4, wherein the main processing unit (31) is formed of three or more layers of circuit boards, and the sub-processing unit (32) is formed of two layers or less of circuit boards.

## Patentansprüche

1. Navigationsgerät mit:
einer Hauptverarbeitungseinheit (31), die eine CPU (11) zum Ausführen einer Routensuchverarbeitung und einer Führungs- und Darstellungsverarbeitung und eine Speichereinrichtung (91) aufweist;
einer mit der Hauptverarbeitungseinheit (31) verbundenen Unterverarbeitungseinheit (32);
einer Verbindungseinrichtung (33) zum Verbinden der Hauptverarbeitungseinheit mit der Unterverarbeitungseinheit; und
einer oder mehreren verarbeiteten Komponenten (92), wie beispielsweise einer GPS-Einrichtung (16), einer Gyroeinrichtung (17), einem Player (19), einer Kommunikationseinrichtung (21), einer Displayeinrichtung (25), einer Sprachein-/-ausgabeeinrichtung (27), einer Motorsteuerungseinrichtung, einer Automatikgetriebesteuerungseinrichtung und/oder Sensoren, wobei alle verarbeiteten Komponenten mit der Unterverarbeitungseinheit (32) verbunden sind;
**dadurch gekennzeichnet, dass**
die Hauptverarbeitungseinheit (31) eine Verarbeitungseinrichtung (11) zum Identifizieren einer verarbeiteten Komponente zum Identifizieren der mit der Unterverarbeitungseinheit verbundenen verarbeiteten Komponente (92) aufweist; und
die Unterverarbeitungseinheit (32) eine Einrichtung (47) zum Erzeugen von Identifizierungsinformation für die verarbeitete Komponente aufweist, und die Verarbeitungseinrichtung (11) zum Identifizieren einer verarbeiteten Komponente die verarbeitete Komponente basierend auf der Identifizierungsinformation für die verarbeitete Komponente identifiziert.

2. Navigationsgerät nach Anspruch 1, wobei die Hauptverarbeitungseinheit einen Zeichenverarbeitungsabschnitt mit einer Zeichenfunktion aufweist, und wobei die verarbeitete Komponente eine Ist-Positionserfassungseinrichtung zum Erfassen einer Ist-Position und einen Datenspeicherabschnitt zum Speichern von Daten aufweist.

3. Navigationsgerät nach Anspruch 1 oder 2, wobei die Verarbeitungseinrichtung zum Identifizieren einer verarbeiteten Komponente die verarbeitete Komponente durch Bestimmen des Typs der Unterverarbeitungseinheit identifiziert.

4. Navigationsgerät nach Anspruch 1, 2 oder 3, wobei die Verbindungseinrichtung (33) eine universelle Schnittstelle ist.

5. Navigationsgerät nach einem der Ansprüche 1 bis 4, wobei die Hauptverarbeitungseinheit (31) aus drei oder mehr Lagen Schaltungsplatinen gebildet wird und die Unterverarbeitungseinheit (32) aus zwei oder weniger Lagen Schaltungsplatinen gebildet wird.

## Revendications

1. Dispositif de navigation comprenant :
une unité de traitement principale (31) prévue avec une CPU (11) pour exécuter le traitement de recherche d'itinéraire et le traitement de guidage et d'affichage et des moyens de mémorisation (91) ;
une unité de traitement auxiliaire (32) connectée à l'unité de traitement principale (31) ;
des moyens de connexion (33) pour connecter l'unité de traitement principale et l'unité de traitement auxiliaire ; et
une ou plusieurs parties traitées (92), telles qu'un GPS (16), un gyroscope (17), un lecteur (19), un dispositif de communication (21), un dispositif d'affichage (25), un dispositif d'entrée/sortie de voix (27), un dispositif de commande de moteur, un dispositif de commande de transmission automatique et/ou des capteurs, dans lequel toutes les parties traitées sont connectées à l'unité de traitement auxiliaire (32) ;
**caractérisé en ce que** :
l'unité de traitement principale (31) est prévue avec des moyens de traitement d'identification de partie traitée (11) pour identifier la partie traitée (92) qui est connectée à l'unité de traitement auxiliaire ; et
l'unité de traitement auxiliaire (32) est prévue avec des moyens de génération d'information d'identification de partie traitée (47) pour générer une information d'identification de partie traitée, et les moyens de traitement d'identification de partie traitée (11) identifient la partie traitée en fonction de l'information d'identification de partie traitée.

2. Dispositif de navigation selon la revendication 1, dans lequel l'unité de traitement principale est prévue avec une partie de traitement de dessin ayant une fonction de dessin, et la partie traitée est prévue avec des moyens de détection de position courante pour détecter une position courante et une partie d'enregistrement de données pour enregistrer des données.

3. Dispositif de navigation selon la revendication 1 ou 2, dans lequel les moyens de traitement d'identification de partie traitée identifient la partie traitée en considérant le type de l'unité de traitement auxiliaire.

4. Dispositif selon la revendication 1, 2 ou 3, dans lequel les moyens de connexion (33) sont une interface générale.

5. Dispositif selon l'une quelconque des revendications 1 à 4, dans lequel l'unité de traitement principale (31) est formée de trois couches ou plus de cartes imprimées et l'unité de traitement auxiliaire (32) est formée de deux couches de cartes imprimées ou moins.
